(19) Europäisches Patentamt / European Patent Office / Office européen des brevets

(11) **EP 3 362 260 B1**

(12) **EUROPÄISCHE PATENTSCHRIFT**

(45) Veröffentlichungstag und Bekanntmachung des Hinweises auf die Patenterteilung:
**19.06.2019 Patentblatt 2019/25**

(21) Anmeldenummer: **16785412.4**

(22) Anmeldetag: **17.10.2016**

(51) Int Cl.:
*B29C 64/112* (2017.01)     *B29C 64/106* (2017.01)
*B33Y 30/00* (2015.01)      *B29C 64/194* (2017.01)
*B33Y 40/00* (2015.01)      *B33Y 10/00* (2015.01)

(86) Internationale Anmeldenummer:
**PCT/EP2016/074867**

(87) Internationale Veröffentlichungsnummer:
**WO 2018/072809 (26.04.2018 Gazette 2018/17)**

(54) **VERFAHREN ZUR HERSTELLUNG VON SILICONELASTOMERTEILEN MIT ERHÖHTER DRUCKQUALITÄT**

METHOD FOR THE PRODUCTION OF SILICONE ELASTOMER PARTS HAVING INCREASED PRINTING QUALITY

PROCÉDÉ DE FABRICATION DE PIÈCES EN ÉLASTOMÈRES DE SILICONE PRÉSENTANT UNE QUALITÉ D'IMPRESSION AMÉLIORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.08.2018 Patentblatt 2018/34**

(73) Patentinhaber: **Wacker Chemie AG**
**81737 München (DE)**

(72) Erfinder:
• **ELLER, Klaus**
**84489 Burghausen (DE)**

• **DORMEIER, Siegfried**
**94166 Stubenberg (DE)**
• **SELBERTINGER, Ernst**
**84489 Burghausen (DE)**

(74) Vertreter: **Bitterlich, Bianca et al**
**Wacker Chemie AG**
**Intellectual Property**
**Hanns-Seidel-Platz 4**
**81737 München (DE)**

(56) Entgegenhaltungen:
**EP-A1- 2 923 824        WO-A1-2016/071241**
**WO-A2-2014/209994**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein generatives 3D-Druck-Verfahren zur Herstellung von elastomeren Formteilen aus Strahlungsvernetzenden Siliconmassen, welches dadurch gekennzeichnet ist, dass der elastomere Formkörper schrittweise aufgebaut wird, indem wiederholt Portionen der vernetzbaren Siliconelastomer-Druckmasse präzise platziert und mittels elektromagnetischer Strahlung vernetzt werden. Auftretende Ladungen auf der Oberfläche der Druckmasse werden dabei über ein Ionisationssystem neutralisiert.

## Stand der Technik

Für die Herstellung von elastomeren Formteilen ausgehend von vernetzbaren Siliconkautschukmassen stehen zahlreiche Verarbeitungsverfahren zur Verfügung. Je nach Konsistenz und Vernetzungsmechanismus der Siliconelastomermasse kann die Herstellung von Formteilen z.B. im Spritzguss, im Pressformverfahren, im Extrusionsverfahren, Vergießen, etc. erfolgen. Die Eigenschaften des gebildeten Siliconformteils (Härte, Reißfestigkeit, Dehnbarkeit, Farbe etc.) werden im Wesentlichen durch die stoffliche Zusammensetzung der vernetzbaren Siliconkautschukmasse (ferner durch die Verarbeitungsbedingungen wie Druck und Temperatur) bestimmt, d.h., diese Verfahren liefern typischerweise bzgl. der mechanischen und optischen Eigenschaften weitgehend isotrope Siliconformteile in hoher Stückzahl.

Die bestehenden Verfahren stoßen jedoch zunehmend an ihre Grenzen, wenn Siliconformteile komplexerer Geometrie, unterschiedlicher Materialzusammensetzung und/oder variabler Eigenschaftsprofile benötigt werden. Die Herstellung dafür geeigneter z.B. Spritzgussformen wird zunehmend aufwändiger und teurer oder ist prinzipell nicht möglich. Derartige Anforderungsprofile bestehen beispielsweise auf dem Gebiet der Exo- und Endoprothesen und insbesondere Epithesen (z.B. künstliche Ohrmuschel, deren weichere und härtere Stellen (Haut, Knorpel) kontinuierlich ineinander übergehen). Auch können sehr komplexe Strukturen, wie die aus der Bionik bekannten, mittels der herkömmlichen Verarbeitungsverfahren nicht realisiert werden. Der allgemeine Trend hin zur Individualisierung und individuellen Anpassung von Gebrauchsartikeln bedingt zudem kleinere Stückzahlen, wodurch die Effizienz konventioneller Verfahren nicht mehr gegeben ist. Gleiches gilt für die Herstellung von Prototypen.

Ein zunehmend an Bedeutung gewinnendes Verfahren zur Herstellung von Formteilen ist das Generative Fertigungsverfahren (*Additive* Manufacturing; 3D-Druck Verfahren), welches zahlreiche unterschiedliche Techniken umfasst, denen ein automatisierter additiver Schichtaufbau des Formteils gemeinsam ist (A. Gebhardt, Generative Fertigungsverfahren, Carl Hanser Verlag, München 2013). Voraussetzung aller generativen Herstellverfahren ist die Darstellung der Geometrie sowie ggf. weiterer Eigenschaften (Farbe, Materialzusammensetzung) des gewünschten Formteils in Form eines digitalen 3D-Datensatzes, welcher als virtuelles Modell des Formteils verstanden werden kann. Diese Modellierung erfolgt vorzugsweise mittels diverser 3D-CAD-Konstruktionsverfahren (*computer-aided design*). Als Eingangsdaten für die Erstellung eines 3D-CAD-Modells können auch 3D-Messdaten dienen, wie diese z.B. aus CT-Messungen (Computer Tomographie) oder MRT-Messungen (Magnet Resonanz Tomographie) resultieren. Der 3D-CAD-Datensatz muss nachfolgend durch material-, verfahrens- und anlagenspezifische Daten ergänzt werden, was dadurch erfolgt, dass dieser über eine Schnittstelle (Interface) in einem geeigneten Format (z.B. STL-, CLI/SLC-, PLY-, VRML-, AMF-Format) an eine Additive Manufacturing Software übergeben wird. Diese Software erzeugt aus den geometrischen Informationen letztlich virtuelle Einzelschichten (*slicen*), wobei die optimale Orientierung des Bauteils im Bauraum, Stützstrukturen etc. Berücksichtigung erfahren. Der vollständige Datensatz erlaubt schließlich die direkte Ansteuerung der für die generative Fertigung eingesetzten Maschine (3D-Drucker).

Der Software-Ablauf ist beispielsweise wie folgt:

1. Konstruktion des Bauteils im CAD-Format
2. Export in das STL-Datenformat
3. Aufteilung des 3D-Modells in Schichten parallel zur Druckebene und Generierung des GCode
4. Übertragung des GCode an die Druckersteuerung

Generative Fertigungsverfahren stehen für zahlreiche Materialien sowie deren Kombinationen zur Verfügung (z.B. Metalle, Kunststoffe, Keramiken, Gläser). Beispielsweise existieren für die additive Fertigung von Werkstücken bereits mehrere etablierte Verfahren wie

- Fused Deposition Modelling (FDM) für Kunststoffe und spezielle Kunstharze
- Stereolithografie für flüssige Kunstharze
- Lasersintern für Metalle, Polymere und Keramik
- Elektronenstrahlschmelzen für Metalle

Beim FDM-Drucken wird ein fester Kunststoff mittels eines Extruders geschmolzen und das Werkstück in Bahnen aufgebaut. Ein Beispiel für Geräte dieser Klasse ist der German Reprap NEO.

Bei der Stereolithografie wird ein flüssiges Kunstharz schichtweise mittels eines Lasers ausgehärtet. Ein Beispiel für Drucker dieser Bauart ist die ProJet-Reihe des Herstellers 3DSystems. Lasersintern und Elektronenstrahlschmelzen arbeiten nach einem ähnlichen Prinzip. Bei beiden Verfahren wird ein Material in Pulverform schichtweise geschmolzen und so das Werkstück aufgebaut. Der Unterschied besteht lediglich darin, wie das Material geschmolzen wird, mittels Laser oder Elektronenstrahl.

WO 2015/059502 A1 beschreibt ein Verfahren zur Herstellung von Siliconteilen ausgehend von einem Bad mit Silicongrundmasse. In diesem Bad wird durch eine nadelförmige Düse punktuell eine zweite Komponente appliziert, welche die Silicongrundmasse örtlich begrenzt aushärten lässt. Die Bewegung der Düse ist dabei mittels CAD-Daten im dreidimensionalen Raum gesteuert. Nach Fertigstellung des Druckes wird das generierte Element aus dem Bad entnommen und von noch nicht ausgehärteter Grundmasse befreit. Nachteile des Verfahrens sind die geringen Druckgeschwindigkeiten und die nachfolgende Reinigung des gedruckten Bauteils von anhaftender unvernetzter Druckmasse ist zeitaufwändig.

DE 20 2013 011 396 U1 beschreibt eine generative Einrichtung welche das Elektrofotografie-Prinzip anwendet. Dabei werden geladene Partikel/ Flüssigkeiten mit einer Bildträgerwalze Schicht für Schicht zu einem Formteil aufgetragen. Die Verfestigung oder Aushärtung der Schichten wird durch thermische Verschmelzung oder UV-Licht-Vernetzung erreicht. Hinterschneidungen oder freitragende Schichten werden durch Einfügen separater Bereichen mit Stützmaterial möglich. Für Silicone ist dieses Verfahren nicht umsetzbar.

DE 20 2016 000 367 U1 beschreibt die Herstellung und den Aufbau eines Komposite-Presspolsters für hydraulische Mehretagenpressen. Hierbei werden über ein metallisches Stützgewebe im 3D Druckverfahren Polsterschichten aus Silicon aufgetragen. Im Herstellungsverfahren werden vernetzende platinkatalysierte Silicone angeführt, welche mit UV-Licht vernetzt bzw. ausvulkanisiert werden. Die UV-Lichtquellen werden dabei als ähnlich des Druckkopfes ausgeführt beschrieben.

In GB 2508204 A wird ein Verfahren zur Erstellung einer körperangepassten Schuheinlage beschrieben. Dabei werden gescannte 3D-Daten des Fußes zur Erstellung einer optimalen Form verwendet. Weiter wird der Druck mit verschiedenen Siliconen unterschiedlicher Härtegrade und das Design mit variablen harten Zonen angeführt. Ebenfalls werden Strategien beschrieben, wie mittels unterschiedlichen geometrischen Formen die nach außen wirkende Duktilität variiert werden kann.

Im speziellen ist hier die Anwendung im Silicon-Druck hervorzuheben. Die Verwendung von Silicon als Druckmaterial, benötigt zusätzliche Erweiterungen oder technische Abänderungen.

In WO 2015/107333, wird eine Vorrichtung und ein Verfahren zum Druck von Siliconelastomerteilen beschrieben. Hierbei wird mittels verschiedener Düsen in einer in einem 3D-Drucker integrierten Mixerkammer ein mehrkomponentiges Silicon vermischt und strangweise generativ ein Formteil erzeugt.

Die im Stand der Technik bekannten Verfahren beziehen sich lediglich auf die Herstellung von Siliconformteilen, jedoch nicht auf verbesserte Druckgenauigkeit und präzisere Abscheidung der Druckmasse durch Kompensation und Vermeidung unerwünschter Effekte während des 3D-Drucks von Siliconformteilen.

Beim Silicon-3D-Druck kann die Druckmasse beispielsweise mittels Tröpfchendosierung (dem so genannten Jetting) oder mittels kontinuierlichem Extrudieren eines Strangs (beim so genannten Dispens-Verfahren) auf dem entstehenden Formteil abgeschieden werden. Es können unterschiedliche Typen von Siliconelastomeren verwendet werden. Eine nähere Beschreibung eines 3D-Silicondruckverfahrens mittels Tropfendosierung ist in WO 2016/071241 A1 angegeben.

Bei den beiden erwähnten Dosier-Prozessen im 3D-Druck / Additive Manufacturing zur Abscheidung von Silicondruckmassen können sowohl bei Jetting- als auch bei Dispensdosierverfahren unerwünschte Effekte durch elektrostatische Aufladung auftreten. Bei zunehmendem Scher-Energieeintrag während der Dosierung verstärkt sich dieser triboelektrische Effekt. Während des Dosiervorgangs laden sich die Druckmasse und damit auch bereits abgeschiedene Druckkörper im Dosier-Prozess aufgrund der Triboelektrizität auf. Diese elektrostatische Aufladung macht sich vor allem bemerkbar bei Jettingprozessen mit hohen Mengendurchsätzen.

Der triboelektrische Effekt führt zu einer elektrostatischen Aufladung der Druckmasse und des Bauteils. Sie tritt ebenfalls verstärkt auf bei Dispensprozessen ab Druckmasse-Durchsätzen von größer als 10 g/h, verstärkt ab 30 g/h und insbesondere verstärkt ab 50 g/h. Bei Dispensprozessen führt die elektrostatische Aufladung dazu, dass der Auftrag der extrudierten Druckmasse auf das abgeschiedene Formteil unregelmäßig wird. Ein linearer Auftrag der Druckmasse in eine gerade Richtung ist dann nicht möglich und führt zu Schlangenlinien und seitlichem Wegwandern der auf der Formteiloberfläche frisch abgeschiedenen Druckmasse.

Ohne an eine Theorie gebunden zu sein, lässt sich der triboelektrische Effekt physikalisch möglicherweise folgendermaßen erklären:

Durch die Scherung bzw. Massenbewegungen der flüssigen Druckmasse in der Düse werden Ladungen getrennt und jeder ausgestoßene Tropfen bzw. Strang trägt eine gewisse unbekannte elektrische Ladung. Die Tropfen bzw. der Strang treffen auf den Druckkörper, wodurch wiederum Ladungstrennung erfolgt. Das schichtweise aufgebaute Formteil agiert vergleichbar einer Aneinanderreihung von geladenen Platten und lädt sich auf sehr hohe elektrische Spannungen, vergleichbar mit einem Schichtkondensator, auf.

Durch die Aufladung entsteht, ausgehend vom abgeschiedenen Formteil aus, ein elektrisches Feld (E-Feld). Dieses E-Feld führt zu einer elektromagnetischen Kraft auf die Tropfen oder Stränge, die aus der Dosierdüse austreten und auf das Formteil abgeschieden werden. Die frisch dosierte unvernetzte flüssigviskose Silicon-Druckmasse wird in ihrem Relaxationsverhalten (Fließverhalten/ Zerfließverhalten) beeinflusst und/oder teilweise deformiert.

Im Rahmen dieser Erfindung ist unter "Relaxation" das Zerfließen der abgeschiedenen Siliconmassen vor der Aushärtung zu verstehen. Die "Relaxationszeit" oder des Öfteren in der Literatur mit "Ralxationszeitkonstante" benannte Zeit, beschreibt die charakteristische Zeit, in welcher positionierte Druckmassen bis zu einem stationären Zustand zerfließen und/ oder ineinander fließen.

Dies zeigt sich besonders an den Außengrenzen eines solchen Formteils. An Kanten solcher aufgeladener Formteile bilden sich durch die charakteristischen Feldüberhöhungen vom Formteil wegbewegende Siliconfäden, die nach außen vom Formteil wegstehen und vergleichbar mit einer "Igelstruktur" sind. In der Luft befindliche Drucktropfen bzw. Stränge werden durch vorhandene E-Felder beeinflusst und/oder durch Abstoßung der gleichen elektrischen Ladung von ihrer Flugbahn (Trajektion) oder in ihrer Ablegebahn abgelenkt. Dies kann soweit führen, dass ausgegebene Drucktropfen bis zu einigen Zentimetern neben der gewünschten Position platziert werden und Druckstränge sich ähnlich eines bewegten "Lassos" diffus und unkontrolliert unterhalb der Druckdüse bewegen. Weiterhin werden kleine geladene Teilmengen der Tropfen, sogenannte Satellitentropfen, bzw. Teilmengen der Stränge, sowie beim Auftreffen der Tropfen hochgeschleuderte Kleinmengen an Silicon ("splashing"), durch das E-Feld oder Ladungsabstoßung abgelenkt und vom Formteil weg bewegt. Dies zeigt sich als Partikelnebel neben dem Formteil oder als unsauberes Druckbild. Weiter kann dies im Extremfall zu Verklebungen der Jetting-Druckdüse führen und damit zu einer Unterbrechung des Druckvorgangs.

Diese auftretenden elektrostatischen Effekte kommen mit wachsenden Durchsätzen an den Dosierdüsen immer stärker zum Tragen und verursachen Abscheidefehler der dosierten Druckmassen. Beim Jettingverfahren ist ein wachsender DosierDurchsatz gleichbedeutend mit einer zunehmenden Jettingfrequenz. Dabei verursachen diese Effekte dementsprechend erhebliche Trajektoriefehler (fehlerhafte Flugbahnen) der dosierten Tropfen, bevor sie auf dem Formteil abgeschieden werden. Beim Dispensverfahren verursachen die Elektrostatik-Effekte mit zunehmendem Durchsatz eine zunehmend unpräzise und unregelmäßige Ablegebahn der abgeschiedenen Stränge) und damit eine Deformation der erzeugten Druckkörper.

Beim Dispensverfahren kommt es verfahrensbedingt zu regelmäßigen Stopps und Unterbrechungen der kontinuierlichen Druckmassen-Strangdosierung an Ecken und Kanten des abgeschiedenen Formteils.

Besonders dort verursachen elektrostatische Aufladungen Wegspritzen und unregelmäßigen Abriss des Druckmassen-Strangs, was zu Lufteinschlüssen, zu wulstartigen Erhöhungen und Tropfnasenbildung am Formteil führt.

Des Weiteren wird das Relaxationsverhalten(Ineinanderfließen) der auf der Formteiloberfläche abgeschiedenen Siliconmassentropfen oder -stränge untereinander und/oder das Fließverhalten der Silicondruckmasse an Grenzschichten zu Fremdbauteilen negativ beeinflusst. Örtliche Ladungen von gesetzten Druckmassen und an Grenzflächen, beeinflussen durch die auftretenden Felder und/oder durch Abstoßung von gleichnamigen Ladungen das Fließ- und Zerfließ-Verhalten gesetzter nichtausgehärteter Druckmassen. Dabei relaxieren (verfließen) die nicht ausgehärteten Druckmassenvolumina durch die Ladungsabstoßung nicht vollständig oder ungenügend und/oder bewegen sich voneinander weg und deformieren so das Formteil. Dies zeigt sich durch Verlaufen der Randbereiche und kann bis zur Bildung von örtlichen Fehlstellen (Kavernen, Luftblasen) führen. Darüber hinaus wird bei zunehmendem Dosierdurchsatz durch die auftretenden Oberflächenladungen die erreichbare Oberflächengüte immer mangelhafter. Es ergeben sich stark strukturierte Oberflächen, welche sich auch nach längerer Relaxationszeit (Fließzeit/Zerfließzeit) nicht selbst nivellieren. Die effektive Relaxationszeit der gesetzten Massen wird durch

$$\tau_{eff} = \tau_s + \tau_{io} - \tau_{vibr},$$

angegeben. Hierin ist

$\tau_{eff}$ die effektiv wirkende Relaxationszeit,
$\tau_s$ die Selbstrelaxationszeit des Drucktropfens/des Druckmassenstrangs ohne jegliche elektrostatische oder mechanische Beeinflussung,
$\tau_{io}$ die Verlängerung der Relaxationszeit aufgrund der elektrostatischen Aufladung,
$\tau_{vibr}$ die Verringerung der Relaxationszeit aufgrund einwirkender mechanischer Schwingungen.

Wobei die Formänderung des Drucktropfens/des Druckmassenstrangs durch

$$u(t) = u + (u_0 - u) \exp(-t/\tau_{eff}),$$

angegeben werden kann. Hierbei ist,

u(t) die zeitabhängige Form des platzierten Drucktropfens/des Druckmassenstrangs,
u die vollständig relaxierte Form des Drucktropfens/des Druckmassenstrangs,
$u_0$ die Form des Drucktropfens unmittelbar nach dem Setzen,
t die Zeit ab dem setzen des Drucktropfens/des Druckmassenstrangs,
$\tau_{eff}$ die effektive Relaxationszeit,
exp(...) die e-Funktion (natürliche Exponentialfunktion).

Durch die örtlich gebundenen Ladungen und die hohe elektrischen Isolationseigenschaften von Siliconmassen ergeben sich für $\tau_{io}$ sehr große Werte beispielsweise im Bereich von einigen Stunden bis Tage.

Ein industrietaugliches, wirtschaftliches und gleichzeitig formschlüssiges 3D-Druck-Verfahren erfordert hohe Dosier-Durchsätze und schnelle 3D-Druck-Geschwindigkeiten. Additive Manufacturing oder 3D-Druck mit vernetzbaren flüssigen Silicondruckmassen oder 3D-Druckverfahren mit Siliconen und anderen 3D-gedruckten Materialien wird durch die oben genannten elektrostatischen Effekte erschwert und nahezu undurchführbar.

Die Ursache liegt in der intrinsischen hohen Anfälligkeit von Siliconen für die elektrostatische Aufladung durch Reibung. Die elektrischen Eigenschaften von unvernetzten und vernetzten Siliconen unterscheiden sich dabei nicht grundsätzlich. Dieses Phänomen nennt man auch "Triboelektrischer Effekt". Dies ist ein seit langem literaturbekannter Effekt bei Polymeren. Silicone und daraus hergestellte 3D-Druckmassen sind dafür sehr anfällig. Silicone befinden sich am negativen Ende der sog. triboelektrischen Reihe, wie sie z.B. in der Master-Thesis von Deanna M. Jacobs, Titel "Electrostatic discharge-understanding and controlling the phenomenon: A handbook for packaging professionals" auf Seite 21 beschrieben ist.

Verfahren und Vorrichtungen zur Ionisation oder zur Beeinflussung der Flugbahn (Trajektion) von Partikeln sind in anderen technischen Gebieten wie beispielsweise bei Tintenstrahldruckern ("Continuous Inkjet-Verfahren") oder Sprühgeräten prinzipiell bekannt, werden dort jedoch im Vergleich zur vorliegenden Erfindung zur Lösung anderer technischer Probleme verwendet.

In der DE 698 08 104 T2 wird ein Tintenstrahldruck-Verfahren beschrieben, bei dem die elektrische Aufladung der dosierten Tropfen für das gewünschte Verfahren technisch erforderlich und notwendig ist. Es handelt sich um ein System zum Steuern und Ausstoßen elektrisch leitfähiger Flüssigkeit. Die Flüssigkeit bzw. der Tintenstrahl wird hierin durch elektrostatische Kräfte in Tröpfchen gewünschter Größe fraktioniert. Weiter werden die Drucktropfen elektrisch aufgeladen und später wiederum durch elektrische Felder abgelenkt und gezielt die Bewegungsbahnen der Tropfen beeinflusst.

DE 689 10 459 T2 beschreibt verschiedene Erweiterungen einer elektrostatischen Tintenstrahldruck-Vorrichtung. Dabei werden Druckparameter der Topfen während des Druckens bestimmt, um Variationen in der Tinte auszugleichen. Weiter werden Vorrichtungen zur Fraktionierung und zur elektrostatischen Aufladung der Tintentropfen angeführt.

DE 10 2005 000 983 A1 beschreibt einen Ionisierungsaufsatz für ein Sprühgerät. Hierbei werden mit Druckluft bewegte Tropfen oder feste Partikel ionisiert und dadurch gezielter zu einem entgegengesetzt potential behafteten Ziel bewegt. Durch die elektrostatischen Kräfte werden die Partikel bzw. Tropfen zum Ziel hingezogen und Sprühverluste minimiert.

EP 2 923 824 A1 offenbart die Verwendung eines Ionisationssystems, um die Verbindung zwischen Schichten zu verbessern.

Keine dieser oben beschriebenen Methoden ist für den 3D-Druck von vernetzbaren Silicon-Druckmassen technisch umsetzbar. Darüber hinaus wurde bisher keine dieser Methoden zur Verbesserung der Druck-Qualität von 3D-Formteilen eingesetzt. Des Weiteren werden in den oben beschriebenen Dosiermethoden nur niedrigviskose Druckmassen im Viskositätsbereich von höchstens 50 mPa·s verwendet. Für Silicondruckmassen höherer Viskosität (über 100000 mPa·s), wie sie in der WO 16071241 beispielhaft beschrieben werden, sind diese Methoden ungeeignet.

Aufgabe der vorliegenden Erfindung war es, daher ein generatives 3D-Druckverfahren für Siliconelastomerformteile bereitzustellen, das zu einem qualitativ hochwertigen Druck bei möglichst kurzen Druckzeiten und damit verbundenen hohen Durchsätzen führt. Insbesondere sollte sichergestellt sein, dass die Druckmassen ohne Trajektoriefehler an der vorgesehen Zielposition platziert werden.

Diese Aufgabe wird überraschenderweise durch das erfindungsgemäße Verfahren und der erfindungsgemäßen Vorrichtung gelöst, es ermöglicht den Druck von Siliconelastomerformteilen mit hohem Durchsatz und signifikant erhöhter und gleichbleibender Druckqualität.

## Abbildungen

Figur 1 zeigt eine Skizze der Seitenansicht einer erfindungsgemäßen Fertigungsanlage mit einer Längs-Ionisationselektrode.

Figur 2 zeigt eine Skizze der Seitenansicht einer erfindungsgemäßen Fertigungsanlage mit einer Ring-Ionisationselektrode.

Figur 3 zeigt eine Skizze der Draufsicht einer erfindungsgemäßen Fertigungsanlage mit einer Längs-Ionisationselektrode.

Figur 4 zeigt eine Skizze der Seitenansicht einer erfindungsgemäßen Fertigungsanlage während des Betriebs gemäß der Randfüllmethode an Fremdbauteilen.

Figur 5 zeigt das beispielhafte Ablaufdiagramm eines erfindungsgemäßen Druckprozesses.

## Beschreibung der Erfindung

Die Erfindung betrifft ein Verfahren zur schichtweisen Herstellung von Siliconelastomerformteilen mit folgenden Schritten:

1) Über eine räumlich unabhängig steuerbare 3D-Druckvorrichtung erfolgt in einer x,y-Arbeitsebene das Aufbringen einer oder mehrerer Druckmassen in Form von Tropfen oder kontinuierlichen Strängen über eine oder mehrere Druckdüsen auf eine räumlich unabhängig steuerbare Trägerplatte, auf ein darauf positioniertes Fremdbauteil oder auf eine zuvor aufgebrachte Druckmassen-Schicht, wobei wenigstens eine der Druckmassen ein durch elektromagnetische Strahlung härtbares Siliconelastomer umfasst;

2) Über mindestens eine räumlich unabhängig steuerbare Quelle für elektromagnetische Strahlung erfolgt die Vernetzung oder Anvernetzung der aufgebrachten Druckmassen, so dass eine Schicht des gehärteten oder teilgehärteten Siliconelastomerformteils entsteht;

3) Die Druckdüse der 3D-Druckvorrichtung oder die Trägerplatte werden definiert in z-Richtung verschoben, so dass die nächste Druckmassen-Schicht in der x,y-Arbeitsebene aufgetragen werden kann;

4) Die Schritte 1) bis 3) werden wiederholt, bis das Siliconelastomerformteil vollständig aufgebaut ist;

wobei die Schritte 1), 2) und 3) unabhängig voneinander oder aneinander gekoppelt, gleichzeitig oder hintereinander in beliebiger Reihenfolge erfolgen,
dadurch gekennzeichnet, dass die Druckmassen nach Verlassen des Druckkopfes einen über ein Ionisationssystem erzeugten Entladebereich durchqueren.

Vorzugsweise handelt es sich bei der dem im erfindungsgemäßen Verfahren eingesetzten Siliconelastomer um eine additionsvernetzenden Siliconkautschukmasse. Diese kann im Schritt 2) entweder thermisch und/oder durch UV- oder UV-VIS-Licht induziert vernetzt werden. Solche Siliconkautschukmassen sind beispielsweise aus WO 2016/071241 A1 und in den darin zitierten Druckschriften bekannt.

Vorzugsweise weisen die Druckmassen eine Viskosität bei 25 °C und einer Scherrate von 0,5 s$^{-1}$ von bevorzugt mindestens 40 Pa·s, besonders bevorzugt mindestens 100 Pa·s und insbesondere bevorzugt mindestens 200 Pa·s.

Die Druckmassen werden vorzugsweise mit Mengendurchsätzen von mehr als 5 g/h, besonders bevorzugt bei Mengendurchsätzen von mehr als 10 g/h, sowie insbesondere bei Mengendurchsätzen von mehr als 20 g/h abgeschieden.

Die Viskosität der Silikonkautschukmassen kann beispielsweise mittels der nachstehend beschriebenen Messmethode bestimmt werden: Unter Verwendung eines Rheometers "MCR 302" der Fa. Anton Paar; Graz, Österreich wird nach DIN EN ISO 3219: 1994 und DIN 53019 gemessen, wobei ein Kegel-Platte-System (Kegel CP50-2) mit einem Öffnungswinkel von 2° verwendet wird. Die Kalibrierung des Gerätes erfolgt mit Normalöl 10000 der Physikalisch-Technischen Bundesanstalt, Braunschweig, Deutschland. Die Messtemperatur beträgt 25,00°C +/- 0,05°C, die Messzeit 3 min. Die Viskositätsangabe stellt den arithmetischen Mittelwert von drei unabhängig durchgeführten Einzelmessungen dar. Die Messunsicherheit der dynamischen Viskosität beträgt 1,5 %.

Vorzugsweise ist das erfindungsgemäße Verfahren dadurch gekennzeichnet, dass zusätzlich zur Siliconelastomer-Druckmasse eine zweite nach Fertigstellung des Siliconelastomerformteils entfernbare Druckmasse als Stützmasse aufgebracht wird. Hierbei ist jede beliebige, bekannte Stützmasse einsetzbar.

Die Einwirkung der elektromagnetischen Strahlung auf die Druckmassen erfolgt vorzugsweise ortsselektiv oder flächig, gepulst oder kontinuierlich sowie mit konstanter oder veränderlicher Intensität.

Weiterhin ist das erfindungsgemäße Verfahren vorzugsweise dadurch gekennzeichnet, dass der Entladebereich die Oberfläche der Trägerplatte, des Fremdbauteils oder einer zuvor aufgebrachten Druckmassen-Schicht teilweise oder vollständig erfasst. Insbesondere ist es vorteilhaft, wenn zusätzlich zur Aufladung der Druckmasse auch Aufladungen des gesamten Druckbereichs und/oder externer Körper bzw. Fremdbauteile neutralisiert werden. Beispielsweise kann hierzu eine aktive Ionisationselektrode vor dem Druck über den Druckbereich als auch über externe Körper und Fremdbauteile bewegt werden.

Das erfindungsgemäße Verfahren ist weiter vorzugsweise dadurch gekennzeichnet, dass ausgehend vom Ionisationssystem eine gezielte Gasströmung aus ionisierbarem Gas in Richtung des Entladebereichs erzeugt wird. Vorzugsweise handelt es sich bei dem ionisierbaren Gas um Druckluft, aber auch andere Gase bzw. Gasgemische wie Stickstoff oder Magerluft (d.h. mit Stickstoff angereicherte Luft) sind einsetzbar. Durch die Gasströmung kann ein gerichteter und besser definierter Entladebereich erzeugt werden. Darüber hinaus ist ein Entstaubungseffekt, also Verminderung des Partikeleintrages, möglich. Dies hat besondere Relevanz für Formteile, die Reinraumbedingungen benötigen wie beispielsweise Medizinteile.

Das erfindungsgemäße Verfahren ist weiter vorzugsweise dadurch gekennzeichnet, dass zuerst die Außengrenzen des Siliconelastomerformteils gedruckt werden und anschließend der umrandete Innenraum vollständig oder teilweise mit Druckmasse aufgefüllt wird.

Die aufgebrachte Druckmasse wird vor Vernetzung oder Anvernetzung vorzugsweise vollständig oder teilweise einer mechanischen Schwingung ausgesetzt. Vorzugsweise befindet sich dabei im umrandeten Innenraum wenigstens ein Fremdbauteil. Das Fremdbauteil kann durch dieses Verfahren formschlüssig in das Siliconelastomerformteil eingedruckt werden.

Vorzugsweise wird während des Drucks die vorliegende mechanische Bewegung/ Schwingungen der Trägerplatte und des Druckkörpers gemessen und ausgewertet.

Oberhalb eines zulässigen Toleranzbereiches können zum Beispiel Meldungen erzeugt und oder der Druckvorgang abgebrochen werden. Dies kann auch als

Sicherheitsmaßname verwenden werden, um einen mechanischen Eingriff von Personen auf die Trägerplatte in den Druckbereich zu erkennen.

Des Weiteren betrifft die vorliegende Erfindung eine Fertigungsanlage zum Einsatz in den oben beschriebenen Verfahren, wobei die Fertigungsanlage mindestens folgende Komponenten umfasst

- eine räumlich unabhängig steuerbare 3D-Druck-Vorrichtung, umfassend ein oder mehrere Reservoirs für ein oder mehrere Druckmassen und wenigstens einen Druckkopf umfassend ein oder mehrere Druckdüsen,

- eine räumlich unabhängig steuerbare Quelle für elektromagnetische Strahlung,

- eine räumlich unabhängig steuerbare Trägerplatte und

- ein Ionisationssystem zur Erzeugung eines Entladebereichs in dem Bereich zwischen Druckdüsen und der Trägerplatte.

Geeignete Druckdüsen zum Silicondruck werden von Firmen wie "NORDSON CORP./USA" und "VERMES MICRODISPENSING GMBH/Deutschland") hergestellt. Diese Druckdüsen ermöglichen einen Druckaufbau im kbar-Bereich, wodurch Flüssigkeitsmengen im pl- bis nl-Bereich innerhalb von 1-100 $\mu$s durch eine Düse mit Durchmessern zwischen 50 und 500 $\mu$m mit einer Geschwindigkeit von 1-100 m/s ausgestoßen werden können. Dieser Vorgang wiederholt sich mit einer Frequenz von bis zu einigen hundert Hz (dies sind typische Größenbereiche, die im Einzelfall erheblich abweichen können).

Sowohl die 3D-Druckvorrichtung als auch die Quelle für elektromagnetische Strahlung, sowie die Trägerplatte sind räumlich unabhängig steuerbar.

Im Rahmen der vorliegenden Erfindung bedeutet "räumlich unabhängig steuerbar", dass die entsprechende Vorrichtung in alle drei Raumrichtungen x, y und z, also dreidimensional, ortsselektiv bewegt werden kann.

Die erfindungsgemäße Fertigungsanlage ist vorzugsweise dadurch gekennzeichnet, dass das Ionisationssystem eine oder mehrere räumlich unabhängig steuerbare Ionisationselektroden umfasst.

Vorzugsweise kann die Neigung der Ionisationselektrode ortsselektiv angepasst werden. Dadurch können an größeren Bauteilen die Ränder optimal mit den Elektroden überstrichen und entladen werden.

Geeignete Ionisationssysteme sind beispielsweise bei der Firma "Haug Ionisationssysteme GmbH & Co. KG \ Deutschland" kommerziell erhältlich. Ein solches System ist üblicherweise aufgeteilt in ein Entladenetzteil und ein Entladegerät, auch Ionisationselektrode genannt. Das Entladenetzteil transformiert die vorhandene Netzspannung (120/230 V), in eine Hochspannung von bis zu einigen tausend Volt. Die Ionisationselektrode kann mehrere Formen annehmen. Als Beispiele seien hier längliche Stäbe, ringförmige oder Ionisationselektroden in Form von Handgeräten angegeben. Alle Ionisationselektroden haben metallische Teile (beispielsweise Spitzen) welche mit der Hochspannung beaufschlagt werden und an denen sich die umgebenden Gasmoleküle entsprechend der anliegenden Spannung aufladen.

Ein konkretes Beispiel für eine geeignete IonisationsElektroden-Einheit zur Vermeidung elektrostatischer Aufladungen ist eine Gerätezusammenstellung der Fa. Haug, bestehend aus einem Netzteil (Haug-Universal-Netzteil EN SL LC 230V / 50-60 Hz mit zugehörigem Netzkabel) und einem oder zwei elektrisch angeschlossenen Haug-Ionisationsstäben (Ionisationselektroden) der VS-Reihe(z.B. VS 028 300 Ionisationsstab).

Die vorliegende Erfindung beschränkt sich dabei nicht auf die beschriebenen Elektrodentypen. Es sind auch Ionisationssysteme und/ oder Ionisationselektroden auf Basis von andere Konstruktionen und System von anderen Hersteller einsetzbar.

Die Elektrode/n wird/werden wie in den Abbildungen beschrieben an der Druckvorrichtung so angebracht, dass sie den Bereich um den Düsenaustritt der Druckmasse deionisieren.

Die erfindungsgemäße Fertigungsanlage ist weiter vorzugsweise dadurch gekennzeichnet, dass das Ionisationssystem mindestens einen Gasanschluss für ein ionisierbares Gas und mindestens eine auf den Entladebereich ausgerichtete Gasdüse aufweist.

Die mindestens eine Ionisationselektrode ist vorzugsweise seitlich geneigt zum Druckkopf angeordnet, sodass der Bereich zwischen den Druckdüsen und Trägerplatte großflächig erfasst wird. Alternativ kann die Ionisationselektrode ringförmig unterhalb jeder Druckdüse angeordnet werden, um somit den Bereich unterhalb jeder einzelnen Druckdüse zu erfassen.

Der Neigungswinkel $\alpha$(Winkel zwischen der Trägerplattenebene und der Querachse der Ionisationselektrode) bei seitlich angebrachten Ionisationssystemen, liegt bevorzugt im Bereich von 10° bis 80°, besonders bevorzugt im Bereich von 20° bis 60°, insbesondere im Bereich von 25° bis 35°.

Des Weiteren liegt der Abstand zwischen der Spitze der Ionisationselektrode und der Spitze der Düse vorzugsweise im Bereich unter 10 cm, besonders bevorzugt unter 5 cm, insbesondere unter 3 cm.

Das Ionisationselektrode ist räumlich und vorzugsweise in der Neigung unabhängig steuerbar, so dass nicht nur die Druckmassen, sondern vorzugsweise auch die Trägerplatte und ggf. Fremdbauteile neutralisiert werden können.

Die Ionisationselektrode kann in der Nähe der Dosiervorrichtung angebracht sein, optional kann sie auch unabhängig von der Dosiervorrichtung den gesamten Bauraum ansteuern, so dass jeder beliebige Punkt des Bauraums deionisiert werden kann.

Die erfindungsgemäße Fertigungsanlage umfasst weiter vorzugsweise mindestens einen Schwingungserzeuger. Der Schwingungserzeuger ist dabei vorzugsweise in wenigstens eine Halterung der Trägerplatte intergiert. Der Schwingungserzeuger ist vorzugsweise so eingerichtet, dass Schwingungen beliebiger mechanische Amplituden und Frequenzen erzeugt werden können.

Des Weiteren ist die erfindungsgemäße Fertigungsanlage vorzugsweise dadurch gekennzeichnet, dass die 3D-Druckvorrichtung mindestens ein konfokales Messsystem mit ein oder mehreren konfokalen Linsen umfasst. Vorzugsweise sind die konfokalen Linsen sowie die Druckdüsen zusammen an einem Schlitten eines Linearaktors angebracht und bilden in ihrer Gesamtheit den Druckkopf der 3D-Druckvorrichtung.

Des Weiteren ist die erfindungsgemäße Fertigungsanlage vorzugsweise dadurch gekennzeichnet, dass sie mindestens eine Steuereinheit besitzt, in der durch das konfokale Messsystem erhaltene Messsignale ausgewertet und weiterverarbeitet werden können. Wie oben beschrieben, lassen sich so beispielsweise Schwingungen und Bewegungen der Trägerplatte oder des Druckkörpers messen und ggf. weiterverarbeiten.

Vorzugsweise sind in der erfindungsgemäßen Fertigungsanlage an der Trägerplatte oder auf eine zuvor aufgebrachte und vernetzte Druckmassen-Schicht eine oder mehrere Positioniergeometrien zur Positionierung von wenigstens einem Fremdbauteil angebracht. Bei diesen Positioniergeometrien handelt es sich vorzugsweise um Abstandhalter oder Positionierpunkte, die auf der Trägerplatte selbst angebaut oder montiert oder durch vorherigen Druck darauf erzeugt worden sind.

Die 3D-Druckvorrichtung umfasst vorzugsweise ein Verfahrsystem für die x,y-Arbeitsebene, wobei das Verfahrsystem eine in y-Richtung bewegliche Verfahrachse, eine in x-Richtung bewegliche Verfahrachse und eine Positioniereinrichtung umfasst. Vorzugsweise ist an der in x-Richtung beweglichen Verfahrachse ein Halter für das Ionisationssystem und die Quelle für elektromagnetische Strahlung angebracht.

Die vorliegende Offenbarung betrifft des Weiteren ein Siliconelastomerformteil, das mit den oben beschriebenen Verfahren hergestellt wurde. Vorzugsweise ist in dieses Siliconelastomerformteil wenigstens ein Fremdbauteil teilweise oder vollständig, formschlüssig eingebettet.

Die Siliconelastomerformteile zeichnen sich durch eine erhöhte Druckqualität, glatte Kanten und geringe Deformation aus. Fremdbauteile lassen sich selbst mit schwierigen und schlecht zugänglichen Oberflächenstrukturen optimal formschlüssig einbetten und umschließen.

Außerdem zeigen die Siliconelastomerformteile eine hohe Übereinstimmungsqualität mit dem CAD Modell und verbesserte Lage- und Ebenheitstoleranzen der Randflächen im Vergleich zum CAD Modell. Es ist zusätzlich eine bessere Oberflächenrauheit möglich (z.B. ein Mittenrauwert: $R_A < 100 \mu m$). Die Oberflächenrauheit lässt sich beispielsweise über Messmethoden nach DIN ISO 25178-1:2016-04 und DIN EN ISO 25178-2:2012-09 bestimmen.

In den Figuren sind Ausführungsbeispiele der Erfindung dargestellt, wobei diese den Gegenstand der Erfindung nur schematisch darstellen. Die dargestellten und im Folgenden mit Bezug zu den Figuren beschriebenen Ausführungsbeispiele sind für den Gegenstand der Erfindung nicht als einschränkend aufzufassen. Dem Fachmann wird eine Vielzahl von Abwandlungen ersichtlich sein, welche im Rahmen der Patentansprüche möglich sind.

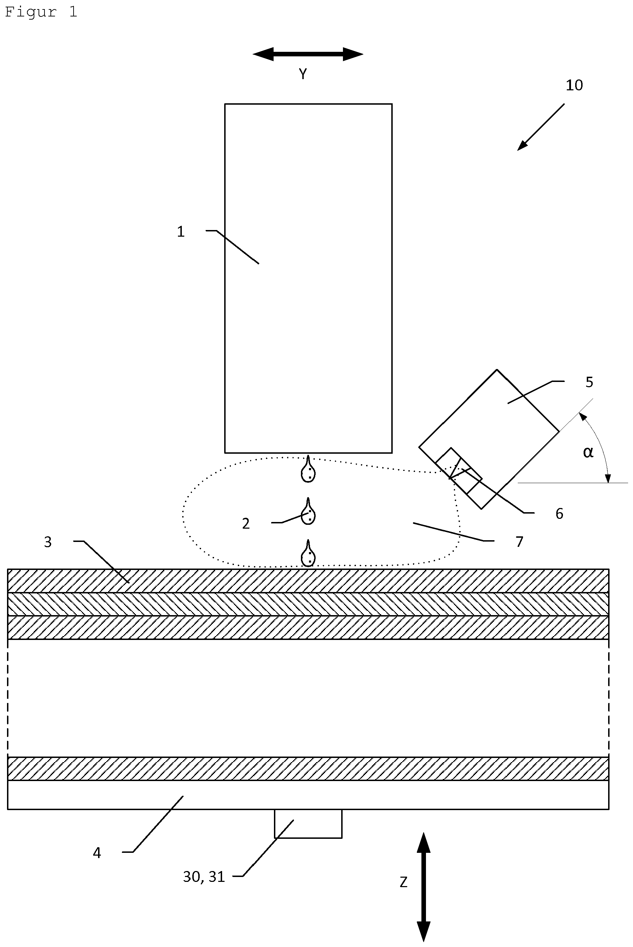

In Figur 1 ist der Aufbau einer erfindungsgemäßen Fertigungsanlage skizziert. In Seitenansicht (10), wird ein beliebiges Siliconelastomerformteil schichtweise auf einer Trägerplatte (4) aufgebaut. Die Trägerplatte wird dabei durch eine Halterung (30) getragen. Die Schichten (3)des Formteils werden dabei entsprechend der Aushärtestrategie sofort nach dem Drucken der jeweiligen Schicht oder nach dem Druck der n-ten Schicht ausgehärtet. Das Aushärten erfolgt mittels elektromagnetischer Strahlung (UV, IR, etc.). Seitlich zur Druckdüse (1)um den Winkel $\alpha$ zur Trägerplattenebenen geneigt, wird durch eine Hochspannungselektrode (5) ein Ionisierbereich (Entladebereich) (7) aufgebaut. Die Hochspannungselektrode bildet zusammen mit einer zugehörigen Spannungsversorgung das Ionisationssystem, das im Stand der Technik hinreichend bekannt ist. Unmittelbar nach dem Verlassen der Druckdüse (1) passiert die Druckmasse (2) in Form von Drucktropfen oder respektive als Druckstrang den Entladebereich (7), der durch die Hochspannungselektrode (5) erzeugt wird. Im Entladebereich (7) werden anhaftende Ladungen durch ionisiertes Gas wie beispielsweise Luft elektrisch neutralisiert. Vorzugsweise wird auch der Bereich, auf dem die Druckmasse auftrifft neutralisiert. Der Druckkörper lädt sich folglich nicht auf und bleibt elektrisch neutral. Zur weiteren Verbesserung der Ladungsneutralisation ist am Ionisationssystem vorzugsweise noch eine gezielte Gasströmung vorgesehen, welche die Spitzen (6) der Hochspannungselektrode (5) in Richtung Druckdüse (1) umspült. Dies ist beispielsweise mit einem Gasanschluss (beispielsweise Druckgas oder ein beliebiges anderes ionisierbares Gas) und einer gerichteten Düse an der Ionisationselektrode (5) zu erreichen. Das vorbeiströmende Gas wird ionisiert und neutralisiert anschließend die gebunden Ladungen der Druckmasse an den Schichten (3) oder im Flug. Durch die Strömung kann ein gerichteter und besser definierter Entladebereich (7) erzeugt werden.

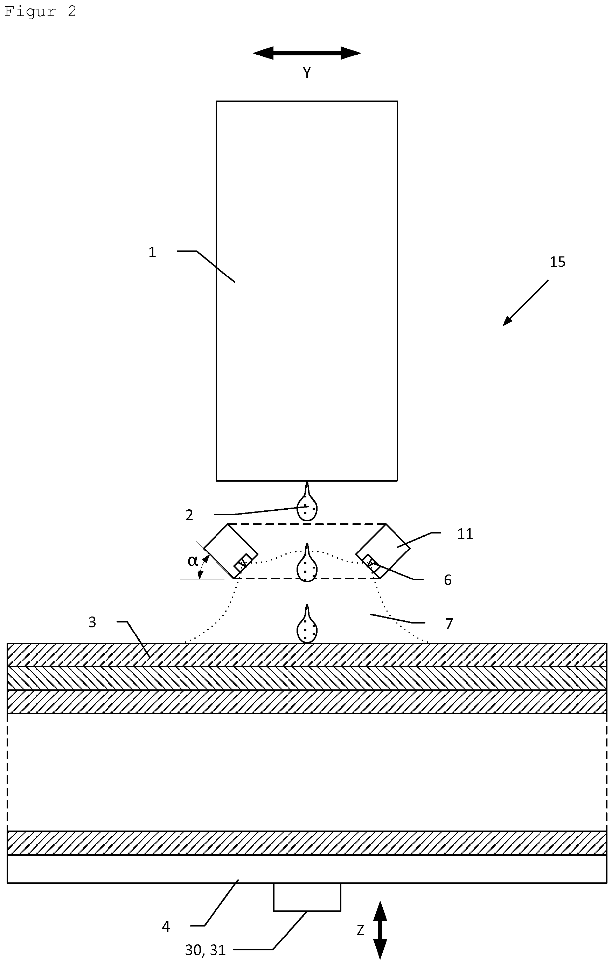

Eine weitere Ausführungsform ist in Figur 2 abgebildet. Für Figur 2 gelten dieselben Ausführungen, wie sie im oben für Figur 1 beschrieben worden sind. Abweichend von der in Figur 1 abgebildeten Ausführungsform skizziert die Seitenansicht (15) der Figur 2 eine unterhalb der Druckdüse (1) angeordnete, ringförmige Hochspannungselektrode (11), durch welche der Strahl der Druckmasse (2) hindurch geführt wird. Geladene Drucktropfen bzw. Stränge werden beim Durchtritt durch den Ringmittelpunkt entladen und treffen im Entladebereich (7) auf das Formteil und die oberste der Schichten (3) auf. Entstehende und bereits vorhandene Ladungen auf dem Formteil und der Schichten (3) werden unmittelbar neutralisiert. Ein gerichteter Gasstrom, welcher die Spitzen (6) der Hochspannungselektrode (11) umspült sorgt für einen örtlich definierten Entladebereich (7) .

Bei speziellen Druckprozessen werden Druckschichten und/ oder Formteile auf, an (Applikationsdruck) oder umgebend (Einbettungsdruck) bestehender Körper erzeugt. Sind diese bestehenden / externen Körper (Fremdbauteile) elektrostatisch aufladbar, ergeben sich ggf. aufgrund der oben genannten elektrostatischen Effekte Ablenkungen der Druck-Tropfen bzw. Stränge. Um dies auszuschließen, wird vor dem Applikations- und Einbettungsdruck die Ionisationselektrode komplett über den gesamten Druckbereich und die externen Körper bewegt, um eine etwaige vorhandene Aufladungen zu neutralisieren. Die Höhe und die Dauer der Entladung vor dem Druck sind abhängig von der Größe und den Stoffeigenschaften der zu bedeckenden Oberfläche.

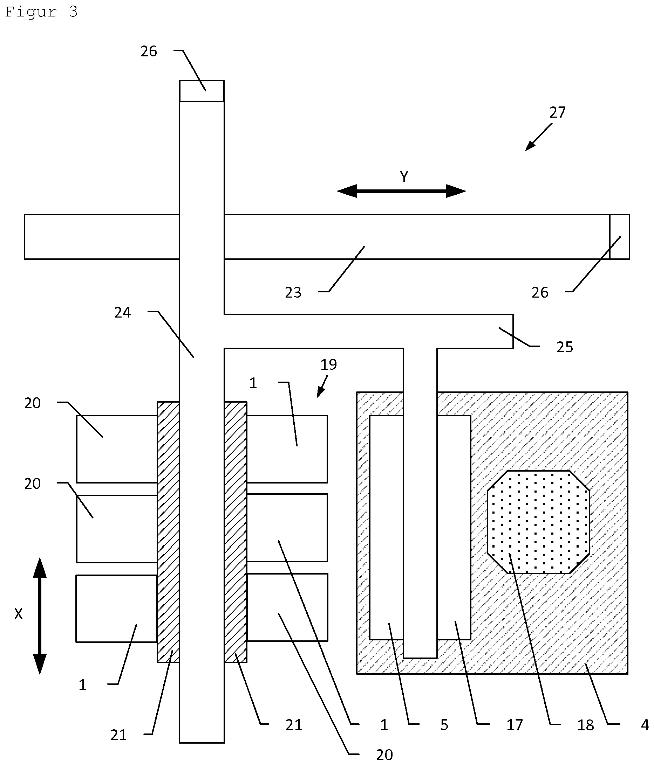

In Figur 3 ist in Draufsicht (27) eine Fertigungsanlage skizziert. Dabei ist ein Druckkopf (19) an einer x-Verfahrachse (24) beweglich in x-Richtung angeordnet. Die beiden Achsen (23,24) bilden mit den Positioniereinrichtungen (26) ein geregeltes Verfahrsystem für die x-y-Ebene. An den Trägerplatten (21) des Druckkopfes (19) sind verschiedene Druckdüsen (1) oder Linsen (20) eines konfokalen Messsystems angebracht. An der x-Verfahrachse (24) ist weiter starr ein Halter (25) angebracht welcher eine Hochspannungselektrode (5) und eine UV-Lichtquelle (17) trägt. Durch Verfahren der y-Verfahrachse (23) kann ein externes Bauteil oder erstellter Formteil (18) auf der Trägerplatte (4) entladen werden. Dabei überstreicht die Hochspannungsektrode (5) den kompletten Körper (18) mit ihrem Ionisationsbereich.

Der Aufbau und das Vorgehen beschrieben entsprechend Figur 3 ist bei Applikationsdruck an stark aufladbaren Fremdbauteilen von enormer Wichtigkeit. Siliconelastomere mit hoher Permittivität, sogenannte elektroaktive Polymere (EAP) seien hier besonders erwähnt. Diese speziellen Siliconelastomere lassen sich durch angelegte E-Felder dazu benutzen, gezielte Bewegungen zu erzeugen. Dabei wird eine dünne Siliconfolie mit einer leitfähigen Kathode und Anode an den Oberflächen versehen. Der Systemaufbau ist ähnlich wie der eines Kondensators. Durch die elektrostatischen Kräfte wird die Siliconfolie komprimiert und erhält eine mechanische Bewegung in lateraler Richtung. Durch gezielte Nutzung dieser Bewegung können Aktoren erstellt werden. Dieser Effekt ist auch umgekehrt nutzbar und kann zur Energiegewinnung oder für Sensorik eingesetzt werden. Hier sind dem Fachmann die Aufbauweisen für solche Systeme hinreichend bekannt. In gewissen Bereichen sind Kombinationen mit 3D-gedruckten Bauteilen anwendbar. Als Beispiel seien Gefäßimplantate mit Pumpwirkung, Hörgeräte, aktive Linsen, aktive Brillen (Sehhilfen), aktive Massageorthesen (Lymphdrainage), aktive Prothesen, Körperunterstützende Orthesen mit Bewegungsunterstützung (Gehbehinderung etc.), integrierter Sensorik in Prothesen und Orthesen, Pumpdosierung von hochreinen Stoffen, usw. genannt.

Weiter ist die Verbindung von ultradünnen Siliconfolien mit gedruckten Stützgerüsten oder die direkte Integration von solchen Folien als durchlässige Membran anwendbar. Als Beispiel seien hier die Aufbewahrung für Blut (Blutbeutel), Wundauflagen für Verbrennungen mit gedrucktem Stützgerüst (Gesichtsmaske, Körperformteil, etc.) und Wundauflagen mit Stützgerüst in Kombination mit kaltem Plasma (Plasmadesinfektion) genannt.

Wie in den obigen Abschnitten bereits beschrieben, laden sich extern beigefügte Teile, insbesondere Siliconteile, elektrostatisch auf. Dieser Effekt ist verstärkt bei elektroaktiven Polymeren (EAP) oder ultradünnen Siliconfolien zu beobachten. Es ist hier also erforderlich, vor dem Positionieren der externen Siliconteile, den gesamten Arbeitsbereich mit der Ionisationselektrode abzufahren und die externen EAP- oder Siliconteile vorab zu neutralisieren. Dies kann mit dem im erfindungsgemäßen Drucker verbauten Ionisationssystem erfolgen.

Beim 3D-Druck mit Siliconelastomeren sind die Verbindung und das Ineinanderfließen und/oder das vollständige Benetzen von Randschichten oder Fremdbauteilen von enormer Wichtigkeit. Insbesondere beim Druck von größeren Bauteilen können spezielle Druckstrategien die Druckzeit vermindern. Hierbei treten jedoch verstärkt Randschichten auf, welche formschlüssig eingebettet werden müssen. Die Viskosität von Siliconelastomeren ist jedoch nicht immer optimal für eine schnelle und sichere Benetzung oder Relaxation (Selbstnivellierung/Zerfließen). Bei Drucken an Fremdbauteilen ist ein konventioneller Druck (Jetting, Dispense) an Oberflächen mit Hinterschneidungen (Poren, sehr raue Oberflächen, Löcher, etc.) teilweise problematisch und ungenügend. Abgeschattete Vertiefungen, senkrechte texturierte Ränder und Hinterschnitte können nicht, wie konstruktiv bedingt, durch von oben eintreffende Tropfen oder Stränge aufgefüllt werden. Das Silconelastomere muss hier stattdessen von der Seite zum Materialrand relaxieren (fließen) und diesen benetzen. Dies ist teilweise nur mit erheblicher Wartezeit oder nicht vertretbaren Standzeiten des Druckers verbunden. Große Relaxationsmengen oder großen Relaxationswegen verursachen lange Selbstrelaxationszeiten $\tau_s$. Auch wenn der Körper und/oder die Druckmassen aufgeladen sind, wird eine ausreichende Benetzung verhindert (sehr große $\tau_{eff}$ durch sehr große $\tau_{io}$). Im Folgenden werden verschiedenen Druckverfahren und Erweiterungen beschrieben um dies zu kompensieren.

Fülldruckmethode und Schwingungsrelaxation:

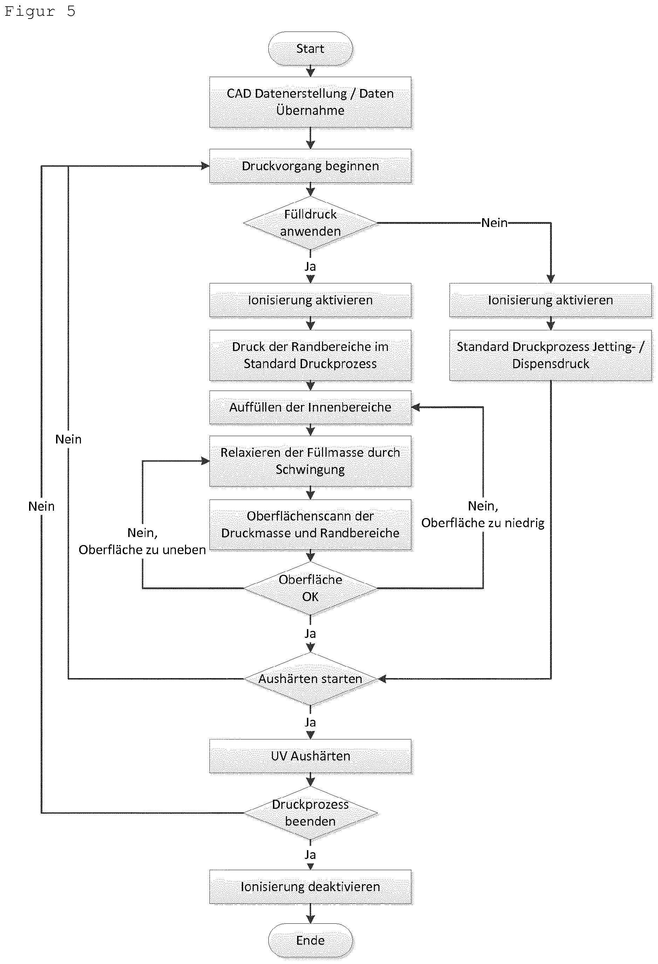

Eine spezielle Ausführungsform des erfindungsgemäßen 3D-Druckverfahrens ist das Fülldruck-Verfahren. Dabei werden größere Körper in Kombination mehrerer Druckstrategien und Verfahren generiert. Bei diesem Verfahren werden die Außengrenzen im normalen Jetting- oder Dispense-Verfahren gedruckt und der ausgesparte Innenraum nachfolgend aufgefüllt. Die Auffüllung erfolgt mit einer dem Dispense-Verfahren ähnlichen Verfahrstrategie. Es wird der Innenraum strangförmig oder von beliebig verschiedenen Punkten punktförmig ausgefüllt. Bei der Auffüllung und der Auffüllstrategie muss auf eine aufsteigende Benetzung der Wandbereiche geachtet werden. Dies ist insbesondere beim strangförmigen Druck von Bedeutung. Durch große Stränge (Durchmesser >1 mm) oder große Tropfen (Durchmesser > 1mm) mit hoher Viskosität, können sich Materialfronten bilden, die Lufteinschlüsse an Randbereichen (Übergang Fest / Auffüllmaterial) verursachen. Weiter benötigt die Relaxation, eine gewisse Zeitspanne. Mit abnehmender Viskosität des Druckmaterials könnte dies verkürzt werden, dies hat jedoch den Nachteil, dass mit der gleichen Masse gesetzte Voxel schnell deformieren und an Randbereichen wegfließen. Eine Möglichkeit um die vorherig genannten Effekte positiv zu beeinflussen, ist die Belegung des Druckkörpers mit einer mechanischen Schwingung (Verringerung von $\tau_{eff}$ um $\tau_{vibr}$). Die Schwingungen sorgen für eine schnellere Nivellierung und führen bei einer optimierten Füllstrategie zu einer optimalen Benetzung der Randbereiche. Vorzugsweise werden hier Piezo-Elemente, Druckluftvibratoren oder Vibrationsmotore zur Erzeugung der Schwingung verwendet. Als Beispiel können gängigen Schwingungserzeuger im Ultraschallbereich genannt werden. Beispielsweise kann die mechanische Schwingung mittels einem im Halter (30) integriertem Schwingungserzeuger (31) auf die Trägerplatte (4) eingekoppelt werden. In Figur 5 ist ein Verfahrensablauf eines 3D-Druckes mit Ionisation, Fülldruck und Relaxation dargestellt.

Eine weitere Anwendung der Schwingungsrelaxation ist der Druck auf Stützmassen. Bei Stützmassen kann ein Setzen oder Ablegen von Druckmassen darüber mit hoher Jettingfrequenz respektive mit hohen kinetischen Energien zur Deformation der tragenden Stützmassenoberfläche führen. Dies wiederum führt zu einer ungewollten Rauheit oder Strukturierung der der Stützmassen zu gewandten Seite der Druckmasse. Durch Schwingungsrelaxieren nivelliert sich eine unkompromierbare Stützmasse mit einer darüber liegenden nicht ausgehärteten Druckmassenschicht selbst aus und bildet eine ebenere und glattere Phasengrenze.

Randfüllmethode:

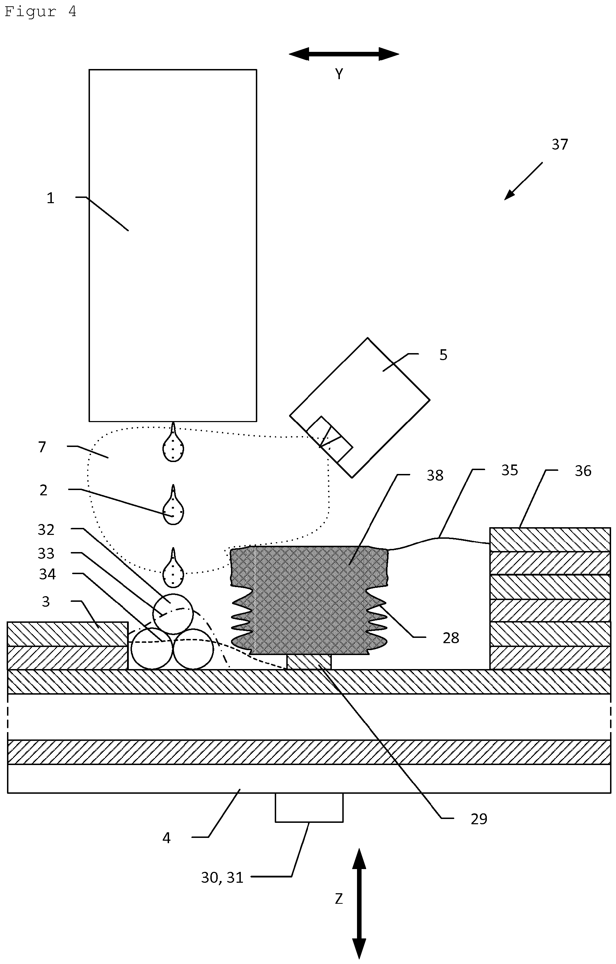

Mit der Randfüllmethode kann ein Fremdbauteil vollflächig benetzt und formschlüssig eingedruckt werden. In Figur 4 ist diese Randfüllmethode in Seitenansicht (37) skizziert. Dabei werden aus der Druckdüse (1) Drucktropfen oder Druckstränge (2) neben ein Fremdbauteil (38) in einem fest definierten Muster abgelegt.

Die abgegebenen Druckmassen (2), vorhandene Druckschichten (3) und Fremdbauteile (38) werden durch die Hochspannungselektrode (5) elektrisch neutralisiert. Fremdbauteile werden je nach Bauteilgeometrie und Erfordernisse auf Positioniergeometrien (29) abgesetzt. Dabei kann die Positioniergeometrie (29) zur Zentrierung, Fixierung und/oder als Abstandhalter verwendet werden. Die abgelegten Druckmassen (32) werden durch mechanische Schwingungen relaxiert und bilden Materialfronten entsprechend der Linie (33) und (34) aus. Dabei wird durch fließendes Silicon von der Seite das Fremdbauteil vollbenetzend umfüllt. Von der Seite nicht bedruckbare Bereiche wie die oben erwähnten Hinterschnitte oder texturierte Oberflächen werden durch die steigende Befüllung vom umgebenden Rand optimal mit den Siliconelastomeren verbunden. Eine vollständige elektrische Neutralisation des Fremdbauteils (38) mit den Randflächen (28) und der Druckmassen (2) durch die Hochspannungselektrode (5) ist hier von enormer Wichtigkeit. Bei örtlicher Aufladung an den Seitenflächen und/oder von abgelegten Druckmassen (32) wird die gewünschte Relaxation der Druckmassen (32) zum Rand (28) des Fremdbauteils (38) behindert und es können sich Lufteinschlüsse bilden. Der Ionisationsbereich (7) muss folglich im Prozess alle Randbereiche (28) des Fremdbauteils (38) überstreichen und dauerhaft die Druckmassen (2) umschließen. Die Aushärtung der gesetzten und relaxierten Druckmassen wird wiederum mittels Strahlung entsprechend der gewünschten Aushärtestrategie vorgenommen. Die mechanischen Schwingungen können durch in die Halterung der Trägerplatte (30) integrierte Schwingungserzeuger (31) in die Trägerplatte (4) eingekoppelt werden. Durch konfokale Höhenmessung können die Materialfronten (33), (34) und (35) vermessen und die noch benötige Druckmasse für eine ebene Front (Oberfläche) berechnet werden. Final wird die oberste gedruckte Front (36) als Bezugsebene genommen und das notwendige Auffüllvolumen auf die Front (36) und die Bauteiloberseite berechnet sowie die noch benötigte Druckmasse nach entsprechenden Schemata mengenmäßig und örtlich positioniert.

Es ergeben sich folgende Vorteile der Erfindung gegenüber dem Stand der Technik:

(1) Kompensation elektrostatischer Effekte beim 3D-Druck mit Siliconelastomeren

(2) Entionisieren von Fremdbauteilen vor und während des 3D-Druckes

(3) Kombination von Entladung (Ionisation) und UV-Aushärten in einem Arbeitsschritt

(4) Einkopplung von Schwingungen zum schnelleren und definierten sowie vollständigen Relaxation der Druckmassen

(5) Eindruck von aufladbaren oder nicht aufladbaren Bauteilen mit Hinterschneidungen und/oder texturierten Oberflächen mit Hilfe der Fülldruckmethode, insbesondere mit Hilfe der Randfüllmethode.

**Beispiel**

Im Folgenden wird ein konkretes Beispiel für das erfindungsgemäße Verfahren in einer erfindungsgemäßen Fertigungsanlage mit Hochspannungselektrode und einer dahinter befindlicher, wassergekühlter UV-LED Leiste beschrieben. Der Druckraum ist dabei komplett geschlossen und nur über eine Klappe mit Sicherheitsschalter zugänglich. Die Ionisation wird zum Beginn des Druckvorganges aktiviert und am Ende des Druckvorganges deaktiviert. Der Verfahrensablauf entspricht dem in Figur 5 skizzierten Ablauf. Die Ionisierung erfolgt dabei mittels einer 50 Hz Wechselspannung im Bereich bis zu 5000 V. Das Ionisierungssystem ist so ausgelegt, dass ein direktes Berühren keine Gefahr für Personen darstellt. Mögliche Fehlerströme sind soweit minimiert (<0,05 mA), dass das System als handhabungssicher eingestuft ist. Weiter ist mit der An- und Abschaltung während des Druckprozesses und der Türschaltung die Möglichkeit eines unangenehmen elektrischen Schlages vermieden. Durch die Ionisation entstehendes Ozon wird direkt aus dem Drucker abgeleitet, somit wird eine Exposition des Arbeitsraumes um den Drucker vermieden. Die Ionisationselektrode ist fest mit dem x-Aktor des Druckers verbunden und somit immer in gleichem Abstand zu den Druckdüsen. Der optimale Abstand bei dem verbauten System ist ca. 30 mm. Der Ionisationsstab ist zur besseren Ionisation der Tropfen im Flug im Bereich von 25° bis 35° zur Druckdüse geneigt. Eine hinter der Ionisationsleiste liegende UV-LED Leiste dient zur Aushärtung des verwendeten Siliconelastomers. Die UV-LED Leiste ist im Druckbetrieb deaktiviert und wird nur während des Aushärtevorgangs aktiviert. Nach dem Druck jeder einzelnen Schicht wird der UV-Härteprozess durchgeführt. Die UV-LED Leiste wird dabei in x-Richtung in geringer Höhe über die Bauteiloberfläche bewegt. Hierbei wird ebenfalls der Ionisationsstab vollständig über das komplette Druckteil bewegt. Es wird folglich eine vollständige Deionisierung und Aushärtung in einem Arbeitszug nach dem Druck jeder einzelnen Schicht durchgeführt. Die UV-LED Leiste wird durch den Sicherheitsschalter bei Öffnen der Zugangstür zum Druckraum ebenfalls deaktiviert. Durch die Druckraum-Umhausung aus UV undurchlässigem Makrolon wird eine UV-Strahlenbelastung der Umgebung vermieden. Mechanische Schwingungen der Trägerplatte werden durch das verbaute konfokale Messsystem während des Druckprozesses erkannt und ggf. wird bei zu staken Schwingungen der Trägerplatte der Druckprozess ausgesetzt oder abgebrochen. Dies wird auch als Sicherheitsmaßnahme verwendet, um mechanischen Eingriff von Personen auf die Druckplatte in den Druckbereich zu erkennen.

**Bezugszeichen der Figuren**

| 1 | Druckdüse (z.B. Jetting-Ventil oder Dispens-Dosiereinheit) |
|---|---|
| 2 | Druckmassen (z.B. in Form von Tropfen wie abgebildet oder als extrudierter Strang) |
| 3 | (Einzelne) Schichten des Formteils |
| 4 | Trägerplatte |
| 5 | Hochspannungselektrode des Ionisationssystems(z.B. stabförmige Ionisationselektrode) |
| 6 | Spitzen der Hochspannungselektrode des Ionisationssystems |
| 7 | Ionisierbereich (Entladebereich) |
| 10 | Seitenansicht Fertigungsanlage mit Längselektrode ca. 30° geneigt |
| 11 | ringförmige Hochspannungselektrode (Ionisationselektrode) |
| 15 | Seitenansicht Fertigungsanlage mit Ringelektrode |
| 17 | UV-Lichtquelle |
| 18 | generativ erstelltes Formteil oder Fremdbauteil |
| 19 | Druckkopf |
| 20 | konfokale Linsen (der konfokalen Messeinrichtung) |
| 21 | Trägerplatten Verfahrschlitten der x-Achse |
| 23 | y-Verfahrachse (z.B. Linearmodul) |
| 24 | x-Verfahrachse (z.B. Linearmodul) |
| 25 | Halter (z.B. ein starrer Halter für eine UV-Quelle und/oder die Ionisationselektrode und/oder eine konfokale Linse) |
| 26 | Positioniereinrichtung (z.B. Schrittmotor mit Sensor) |
| 27 | Draufsicht Fertigungsanlage |
| 28 | Randbereich Fremdbauteil |
| 29 | Stütz- und Positioniergeometrie |
| 30 | Halterung der Trägerplatte |
| 31 | Schwingungserzeuger |
| 32 | abgelegte Druckmassen (z.B. in Form von Strängen oder Tropfen) |
| 33 | Materialfront 1 (wenig relaxiert) |
| 34 | Materialfront 2 (fortschreitend relaxiert) |
| 35 | Materialfront 3 (fortgeschritten relaxiert) |
| 36 | Front der obersten gedruckten Materialschicht (entspricht der Oberseite des Formteils) |
| 37 | Seitenansicht Fertigungsanlage beim Betrieb der Randfüllmethode |
| 38 | Fremdbauteil |

**Patentansprüche**

1. Verfahren zur schichtweisen Herstellung von Siliconelastomerformteilen mit folgenden Schritten:

   1) Über eine räumlich unabhängig steuerbare 3D-Druckvorrichtung erfolgt in einer x,y-Arbeitsebene das Aufbringen einer oder mehrerer Druckmassen (2) in Form von Tropfen oder kontinuierlichen Strängen über eine oder mehrere Druckdüsen (1) auf eine räumlich unabhängig steuerbare Trägerplatte (4), auf ein darauf positioniertes Fremdbauteil (38) oder auf eine zuvor aufgebrachte Druckmassen-Schicht, wobei wenigstens eine der Druckmassen (2) ein durch elektromagnetische Strahlung härtbares Siliconelastomer umfasst;

2) Über mindestens eine räumlich unabhängig steuerbare Quelle für elektromagnetische Strahlung erfolgt die Vernetzung oder Anvernetzung der aufgebrachten Druckmassen (2), so dass eine Schicht (3) des gehärteten oder teilgehärteten Siliconelastomerformteils entsteht;

3) Die Druckdüse (1) der 3D-Druckvorrichtung oder die Trägerplatte (4) werden definiert in z-Richtung verschoben, so dass die nächste Druckmassen-Schicht in der x,y-Arbeitsebene aufgetragen werden kann;

4) Die Schritte 1) bis 3) werden wiederholt, bis das Siliconelastomerformteil vollständig aufgebaut ist,

wobei die Schritte 1), 2) und 3) unabhängig voneinander oder aneinander gekoppelt, gleichzeitig oder hintereinander in beliebiger Reihenfolge erfolgen, **dadurch gekennzeichnet, dass** die Druckmassen (2) nach Verlassen der Druckdüse (1) einen über ein Ionisationssystem erzeugten Entladebereich (7) durchqueren.

2. Verfahren gemäß Anspruch 1, **dadurch gekennzeichnet, dass** zusätzlich zur Siliconelastomer-Druckmasse eine zweite nach Fertigstellung des Siliconelastomerformteils entfernbare Druckmasse als Stützmasse aufgebracht wird.

3. Verfahren gemäß einem der Ansprüche 1 oder 2, **dadurch gekennzeichnet, dass** der Entladebereich (7) die Oberfläche der Trägerplatte (4), des Fremdbauteils (38) oder der zuvor aufgebrachten Druckmassen-Schicht teilweise oder vollständig erfasst.

4. Verfahren gemäß einem der Ansprüche 1 bis 3 **dadurch gekennzeichnet, dass** ausgehend vom Ionisationssystem eine gezielte Gasströmung aus ionisierbarem Gas in Richtung des Entladebereichs (7) erzeugt wird.

5. Verfahren gemäß einem der Ansprüche 1 bis 4 **dadurch gekennzeichnet, dass** zuerst die Außengrenzen des Siliconelastomerformteils gedruckt werden und anschließend der umrandete Innenraum vollständig oder teilweise mit Druckmasse (2) aufgefüllt wird.

6. Verfahren gemäß einem der Ansprüche 1 bis 5 **dadurch gekennzeichnet, dass** die aufgebrachte Druckmasse (2) vor Vernetzung oder Anvernetzung vollständig oder teilweise einer mechanischen Schwingung ausgesetzt werden.

7. Verfahren gemäß Anspruch 6 **dadurch gekennzeichnet, dass** sich im umrandeten Innenraum wenigstens ein Fremdbauteil befindet.

8. Fertigungsanlage zum Einsatz in einem Verfahren gemäß einem der Ansprüche 1 bis 7, wobei die Fertigungsanlage mindestens folgende Komponenten umfasst

    - eine räumlich unabhängig steuerbare 3D-Druck-Vorrichtung, umfassend ein oder mehrere Reservoirs für ein oder mehrere Druckmassen (2) und wenigstens einen Druckkopf (19) umfassend ein oder mehrere Druckdüsen (1),
    - eine räumlich unabhängig steuerbare Quelle für elektromagnetische Strahlung,
    - eine räumlich unabhängig steuerbare Trägerplatte (4) und
    - ein Ionisationssystem zur Erzeugung eines Entladebereichs (7) in dem Bereich zwischen Druckdüsen (1) und der Trägerplatte (4) .

9. Fertigungsanlage gemäß Anspruch 8, **dadurch gekennzeichnet, dass** das Ionisationssystem eine oder mehrere räumlich unabhängig steuerbare Ionisationselektroden (5, 11) umfasst.

10. Fertigungsanlage gemäß einem der Ansprüche 8 oder 9, **dadurch gekennzeichnet, dass** das Ionisationssystem mindestens einen Gasanschluss für ein ionisierbares Gas und mindestens eine auf den Entladebereich (7) ausgerichtete Gasdüse aufweist.

11. Fertigungsanlage gemäß einem der Ansprüche 8 bis 10, **dadurch gekennzeichnet, dass** das Ionisationssystem (5) seitlich geneigt zum Druckopf (19) oder ringförmig unterhalb jeder Druckdüse (1) angeordnet ist.

12. Fertigungsanlage gemäß einem der Ansprüche 8 bis 11, **dadurch gekennzeichnet, dass** die Fertigungsanlage mindestens einen Schwingungserzeuger (31) umfasst.

13. Fertigungsanlage gemäß Anspruch 12, **dadurch gekennzeichnet, dass** der Schwingungserzeuger (31) in wenigstens eine Halterung (30) der Trägerplatte (4) intergiert ist.

**Claims**

1.  Method for layer-by-layer production of shaped silicone elastomer articles, comprising the following steps:

    1) By means of a spatially independently controllable 3D printing device, in an x,y working plane, two or more print materials (2) are applied in the form of droplets or continuous strands via one or more print nozzles (1) to a spatially independently controllable carrier plate (4), to an extrinsic component (38) positioned thereon or to a print material layer applied beforehand, wherein at least one of the print materials (2) comprises a silicone elastomer curable by electromagnetic radiation;

    2) By means of at least one spatially independently controllable source of electromagnetic radiation, the print materials (2) applied are crosslinked or partly crosslinked, so as to form a layer (3) of the cured or partly cured shaped silicone elastomer article;

    3) The print nozzle (1) of the 3D printing device or the carrier plate (4) are moved in z direction in a defined manner, such that the next print material layer can be applied in the x,y working plane;

    4) Steps 1) to 3) are repeated until the shaped silicone elastomer article is fully constructed,

    wherein steps 1), 2) and 3) are effected independently of one another or coupled to one another simultaneously or successively in any sequence, **characterized in that** the print materials (2) after leaving the print nozzle (1) traverse a discharge region (7) generated by means of an ionization system.

2.  Method according to Claim 1, **characterized in that**, in addition to the silicone elastomer print material, a second print material removable after completion of the shaped silicone elastomer article is applied as support material.

3.  Method according to either of Claims 1 and 2, **characterized in that** the discharge region (7) covers part or all of the surface of the carrier plate (4), of the extrinsic component (38) or of the previously applied print material layer.

4.  Method according to any of Claims 1 to 3, **characterized in that** a controlled gas flow of ionizable gas is generated proceeding from the ionization system in the direction of the discharge region (7).

5.  Method according to any of Claims 1 to 4, **characterized in that** the outer boundaries of the shaped silicone elastomer article are printed first and then the outlined interior is filled completely or partly with print material (2).

6.  Method according to any of Claims 1 to 5, **characterized in that** the print material (2) applied is subjected fully or partly to mechanical vibration prior to crosslinking or partial crosslinking.

7.  Method according to Claim 6, **characterized in that** there is at least one extrinsic component present in the outlined interior.

8.  Manufacturing system for use in a method according to any of Claims 1 to 7, wherein the manufacturing system comprises at least the following components:

    - a spatially independently controllable 3D printer device comprising one or more reservoirs for one or more print materials (2) and at least one print head (19) comprising one or more print nozzles (1),
    - a spatially independently controllable source of electromagnetic radiation,
    - a spatially independently controllable carrier plate (4) and
    - an ionization system for generation of a discharge region (7) in the region between print nozzles (1) and the carrier plate (4).

9.  Manufacturing system according to Claim 8, **characterized in that** the ionization system comprises one or more spatially independently controllable ionization electrodes (5, 11).

10. Manufacturing system according to either of Claims 8 and 9, **characterized in that** the ionization system has at least one gas connection for an ionizable gas and at least one gas nozzle directed toward the discharge region (7).

11. Manufacturing system according to any of Claims 8 to 10, **characterized in that** the ionization system (5) is arranged in a laterally inclined manner with respect to the print head (19) or in the form of a ring beneath each print nozzle (1).

12. Manufacturing system according to any of Claims 8 to 11, **characterized in that** the manufacturing system comprises at least one vibration generator (31).

13. Manufacturing system according to Claim 12, **characterized in that** the vibration generator (31) is integrated into at least one holder (30) of the carrier plate (4).

## Revendications

**1.** Procédé de fabrication en couches de pièces moulées en élastomère de silicone, comprenant les étapes suivantes :

1) l'application d'une ou de plusieurs matières d'impression (2) sous la forme de gouttes ou de filaments continus a lieu par un dispositif d'impression 3D pouvant être contrôlé indépendamment dans l'espace dans un plan de travail x,y par une ou plusieurs buses d'impression (1) sur une plaque support (4) pouvant être contrôlée indépendamment dans l'espace, sur un composant étranger (38) positionné sur celle-ci ou sur une couche de matière d'impression appliquée auparavant, au moins une des matières d'impression (2) comprenant un élastomère de silicone durcissable par un rayonnement électromagnétique ;
2) la réticulation ou la réticulation de surface des matières d'impression appliquées (2) a lieu par au moins une source de rayonnement électromagnétique pouvant être contrôlée indépendamment dans l'espace, de telle sorte qu'une couche (3) de la pièce moulée en élastomère de silicone durcie ou partiellement durcie se forme ;
3) la buse d'impression (1) du dispositif d'impression 3D ou la plaque support (4) est décalée d'une manière définie dans la direction z, de telle sorte que la couche de masse d'impression suivante puisse être appliquée dans le plan de travail x,y ;
4) les étapes 1) à 3) sont répétées jusqu'à ce que la pièce moulée en élastomère de silicone soit entièrement formée,

les étapes 1), 2) et 3) ayant lieu indépendamment les unes des autres ou couplées les unes aux autres, simultanément ou successivement dans un ordre quelconque,
**caractérisé en ce que** les matières d'impression (2) traversent après la sortie de la buse d'impression (1) une zone de décharge (7) formée par un système d'ionisation.

**2.** Procédé selon la revendication 1, **caractérisé en ce qu'**en plus de la matière d'impression en élastomère de silicone, une deuxième matière d'impression pouvant être éliminée après la production de la pièce moulée en élastomère de silicone est appliquée en tant que matière support.

**3.** Procédé selon l'une quelconque des revendications 1 ou 2, **caractérisé en ce que** la zone de décharge (7) comprend en partie ou en totalité la surface de la plaque support (4), du composant étranger (38) ou de la couche de matière d'impression appliquée auparavant.

**4.** Procédé selon l'une quelconque des revendications 1 à 3, **caractérisé en ce qu'**un courant gazeux ciblé de gaz ionisable est généré dans la direction de la zone de décharge (7) à partir du système d'ionisation.

**5.** Procédé selon l'une quelconque des revendications 1 à 4, **caractérisé en ce que** les limites extérieures de la pièce moulée en élastomère de silicone sont tout d'abord imprimées, puis l'espace intérieur bordé est rempli en totalité ou en partie avec une matière d'impression (2).

**6.** Procédé selon l'une quelconque des revendications 1 à 5, **caractérisé en ce que** la matière d'impression appliquée (2) est exposée en totalité ou en partie à une vibration mécanique avant la réticulation ou la réticulation de surface.

**7.** Procédé selon la revendication 6, **caractérisé en ce qu'**au moins un composant étranger se trouve dans l'espace intérieur bordé.

**8.** Unité de production destinée à une utilisation dans un procédé selon l'une quelconque des revendications 1 à 7, l'unité de production comprenant au moins les composants suivants :

- un dispositif d'impression 3D pouvant être contrôlé indépendamment dans l'espace, comprenant un ou plusieurs réservoirs pour une ou plusieurs matières d'impression (2) et au moins une tête d'impression (19) comprenant une ou plusieurs buses d'impression (1),
- une source de rayonnement électromagnétique pouvant être contrôlée indépendamment dans l'espace,
- une plaque support (4) pouvant être contrôlée indépendamment dans l'espace, et
- un système d'ionisation pour la formation d'une zone de décharge (7) dans la zone comprise entre les buses d'impression (1) et la plaque support (4).

**9.** Unité de production selon la revendication 8, **caractérisée en ce que** le système d'ionisation comprend une ou plusieurs électrodes d'ionisation (5, 11) pouvant être contrôlées indépendamment dans l'espace.

**10.** Unité de production selon l'une quelconque des revendications 8 ou 9, **caractérisée en ce que** le système d'ionisation comprend au moins un raccordement de gaz pour un gaz ionisable et au moins une buse de gaz dirigée vers la zone de décharge (7).

**11.** Unité de production selon l'une quelconque des revendications 8 à 10, **caractérisée en ce que** le système d'ionisation (5) est agencé sous forme inclinée latéralement vers la tête d'impression (19) ou sous forme annulaire en dessous de chaque buse d'impression (1) .

**12.** Unité de production selon l'une quelconque des revendications 8 à 11, **caractérisée en ce que** l'unité de production comprend au moins un générateur de vibrations (31).

**13.** Unité de production selon la revendication 12, **caractérisée en ce que** le générateur de vibrations (31) est intégré dans au moins une fixation (30) de la plaque support (4).

Figur 1

Figur 2

Figur 3

Figur 4

Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015059502 A1
- DE 202013011396 U1
- DE 202016000367 U1
- GB 2508204 A
- WO 2015107333 A
- WO 2016071241 A1
- DE 69808104 T2
- DE 68910459 T2
- DE 102005000983 A1
- EP 2923824 A1
- WO 16071241 A

**In der Beschreibung aufgeführte Nicht-Patentliteratur**

- **A. GEBHARDT.** Generative Fertigungsverfahren. Carl Hanser Verlag, 2013
- Electrostatic discharge-understanding and controlling the phenomenon: A handbook for packaging professionals. **DEANNA M. JACOBS.** Master-Thesis. 21